## Europäisches Patentamt
## European Patent Office
## Office européen des brevets

(19)

(11) Veröffentlichungsnummer: **0 219 646**
**B1**

(12) # EUROPÄISCHE PATENTSCHRIFT

(45) Veröffentlichungstag der Patentschrift:
**08.11.89**

(21) Anmeldenummer: **86111607.7**

(22) Anmeldetag: **22.08.86**

(51) Int. Cl.⁴: **A 23 G  9/04,** A 23 G  9/08,
A 23 G  9/22, A 23 G  9/28

(54) Anordnung zum Herstellen von kugelförmigen Einzelportionen aus Speiseeis.

(30) Priorität: **28.08.85  DE 3530682**

(43) Veröffentlichungstag der Anmeldung:
**29.04.87 Patentblatt 87/18**

(45) Bekanntmachung des Hinweises auf die Patenterteilung:
**08.11.89 Patentblatt 89/45**

(84) Benannte Vertragsstaaten:
**AT BE CH DE FR GB IT LI LU NL SE**

(56) Entgegenhaltungen:
**DE-A- 1 53ª 382
FR-A- 1 448 594
GB-A- 2 021 381
GB-A- 2 139 337
NL-A- 7 612 388
US-A- 1 647 944
US-A- 2 412 050
US-A- 2 759 434
US-A- 3 126 841
US-A- 3 907 472
US-A- 4 012 185**

(73) Patentinhaber: **Schöller Lebensmittel GmbH & Co. KG,
Bucher Strasse 137, D-8500 Nürnberg 90 (DE)**

(72) Erfinder: **Der Erfinder hat auf seine Nennung verzichtet**

(74) Vertreter: **Tergau, Enno et al, Patentanwälte Tergau &
Pohl Postfach 11 93 47 Hefnersplatz 3,
D-8500 Nürnberg 11 (DE)**

## Beschreibung

Die Erfindung betrifft eine Anordnung zum Herstellen von Einzelportionen aus Speiseeis mit folgenden Merkmalen:

a) wenigstens einer Unterform;

b) wenigstens einer Portioniervorrichtung für cremeförmige Speiseeismasse;

c) wenigstens ein auf- und abbewegbares Formwerkzeug

Anordnungen dieser Art sind beispielsweise aus der US-A 3 907 472 bekannt. Als Unterform dienen dort konusartige Waffeln, in welche zunächst ein Speiseeisprodukt derart eingefüllt wird, daß die Waffel nicht nur vollständig gefüllt ist, sondern daß ein Überschuß kronenartig über den oberen Waffelrand übersteht. Dieser Überschuß wird alsdann von einem auf- und abbewegbaren Formwerkzeug in eine gewünschte, beispielsweise halbkugelförmige Form gebracht.

Die vorbekannte Einrichtung eignet sich zum Füllen von becherartigen Unterformen, wobei diese Unterformen aus Kunststoff oder auch aus Gebäck, beispielsweise Waffeln, bestehen können. Sollen mit derartigen Anordnungen jedoch Speiseeiskugeln hergestellt werden, so müßte als Unterform eine Halbkugel verwendet werden, aus der nach endgültiger Formung die Eisportion entnommen wird.

Anordnungen dieser Art machen wegen der auftretenden Reibungsverhältnisse Schwierigkeiten, so daß die Produktionsgeschwindigkeit der Anordnung erheblich beschränkt werden muß.

Andererseits ist es bekannt, fabrikatorisch hergestelltes Speiseeis im Anschluß an den Fabrikationsvorgang zu Kugeln zu formen. Eine Möglichkeit hierzu besteht darin, halbkugelförmige Schalen mit der Speiseeisrohmasse zu füllen und diese dann zu gefrieren. Es entstehen aus diese Weise Speiseeis-Halbkugeln, die aus der Form entnommen und zu Vollkugeln zusammengesetzt werden können.

Eine weitere Möglichkeit zur Formung kugelförmiger Speiseeisportionen besteht darin, eine Kugelform durch einen Füllschlitz mit Speiseeisrohmasse zu füllen und dann zu gefrieren. Nach Beendigung des Gefriervorganges wird die Kugel geöffnet und der nun kugelförmige Inhalt entnommen. Ein Verfahren dieser Art ist beispielsweise in der AT-B 365 150 beschrieben.

Der Erfindung liegt die Aufgabe zugrunde, eine verbesserte Anordnung zum Herstellen von kugelförmigen Einzelportionen aus Speiseeis anzugeben. Zur Lösung dieser Aufgabe wird von einer Anordnung mit folgenden bekannten Merkmalen ausgegangen:

a) wenigstens einer Unterform;

b) wenigstens einer Portioniervorrichtung für cremeförmige Speiseeismasse;

c) wenigstens ein auf- und abbewegbares Formwerkzeug.

Die Anordnung ist erfindungsgemäß dadurch gekennzeichnet, daß zur Herstellung von kugelförmigen Speiseeisportionen zusätzlich folgende Merkmale vorhanden sind:

d) Die Unterform ist halbkugelförmig;

e) das Formwerkzeug ist ein in Rotation versetzbares halbkugelsegmentartiges Streichwerkzeug, dessen segmente an ihren Frontseiten schaufelartig aufgewölbt sind.

Dadurch, daß das Formwerkzeug ein in Rotation versetzbares halbkugelsegmentartiges Streichwerkzeug ist, wird die Reibung zwischen dem Werkzeug und der Eismasse erheblich reduziert. Die Gefahr, daß die Eismasse bei der Rotation als Ganzes mitgenommen wird, ist damit beseitigt, so daß die Produktionsgeschwindigkeit erhöht werden kann. Allerdings besteht bei derartigen Segmenten die Gefahr, daß sich Eismasse an der Stirnseite aufbaut, was zu Betriebsstörungen führen kann. Aus diesem Grunde sind die Segmente beim hier vorgeschlagenen Werkzeug an ihren Frontseiten schaufelartig aufgewölbt, so daß etwa überstehende Masse von diesen aufgewölbten Teilen erfaßt und wieder glattgestrichen wird.

Im einfachsten Fall nimmt die halbkugelförmige Unterform nur eine einzige Speiseeisportion auf. Rationeller ist es jedoch, wenn mehrere halbkugelförmige Unterformen zu einer Einheit zusammengefaßt sind.

Das erwähnte Streichwerkzeug hat vorzugsweise die Form einer Halbkugel, an deren Zenit ein rohroder stangenförmiger Fortsatz befestigt ist und deren Mantel unter Zurücklassen von Segmenten durchbrochen ist.

Es kann auf diese Weise ein einziges Segment gebildet werden, es können aber auch mehrere, beispielsweise drei Segmente vorhanden sein, die dann vorzugsweise an ihrem Äquatorial-Ende mittels eines Kreisringes miteinander verbunden sind.

Die Unterform wird bei Betrieb der Anordnung taktweise durch die gesamte Anordnung hindurchgeleitet. Sie wird zunächst unter die Dosiereinrichtung gefahren, wobei die einzelnen Dosierrohre in einer Anzahl und Anordnung vorhanden sein müssen, die der Anzahl und Anordnung der Halbkugelförmigen Aufnahmeräume der Unterform entspricht. Nach Durchführung des Füllvorganges rückt die Form weiter zur Glattstreichstation. In dieser Station sind die beschriebenen rotierenden Streichwerkzeuge vorhanden. Auch diese Werkzeuge müssen in einer Anzahl und Anordnung vorhanden sein, die der Anzahl der Aufnahmeräume für Speiseeisportionen entspricht. Die Werkzeuge werden taktweise nach unten bewegt und alsdann gemeinsam in Rotation versetzt. Nach Durchführung des Glattstreichvorganges werden die Werkzeuge wieder angehoben, worauf die Form mit den jetzt fertig gebildeten Speiseeiskugeln zur nächsten Station weiterrücken kann. Diese nächste Station ist ein Tiefkühltunnel oder Tiefkühlraum, in welchem die Kugeln durch Absenken der Temperatur gehärtet werden. Nach Austritt aus dem Tiefkühltunnel gelangen die Formen mitsamt den jetzt harten Speiseeiskugeln in die Entnahmevorrichtung, wobei die Unterformen zur Erleichterung der Entnahme mit einem Warmluftstrom oder dgl. leicht angewärmt oder mit einer geeigneten Vibrationsvorrichtung in Vibration versetzt werden können. Zur Erleichterung des Entnahmevorganges wird vorgeschlagen, daß die Entnahmevorrichtung für jede Speiseeiskugel wenigstens zwei Spicknadeln aufweist, die um eine gemeinsame Mittelachse drehbar und entlang dieser Achse auf- und abbewegbar sind. Mithilfe dieser Spicknadeln können die Kugeln dann leicht erfaßt und durch Anheben aus der Form entfernt werden. In einem nächsten Arbeitstakt wird eine geeignete Verpackungseinheit unter die Kugeln geschoben und die Kugeln werden von den Nadeln abgestreift, was durch ruckartiges Bewegen oder auch durch Zuhilfenahme eines Abstreiffingers oder dgl. möglich ist.

Die Erfindung wird im folgenden anhand der Zeichnung näher erläutert. Es stellen dar:

Fig. 1 ein schematische Fließdiagramm;

Fig. 2 eine Ausführungsform eines Glattstreichwerkzeuges in perspektivischer Ansicht;

Fig. 3 eine Ausführungsform einer Entnahmevorrichtung.

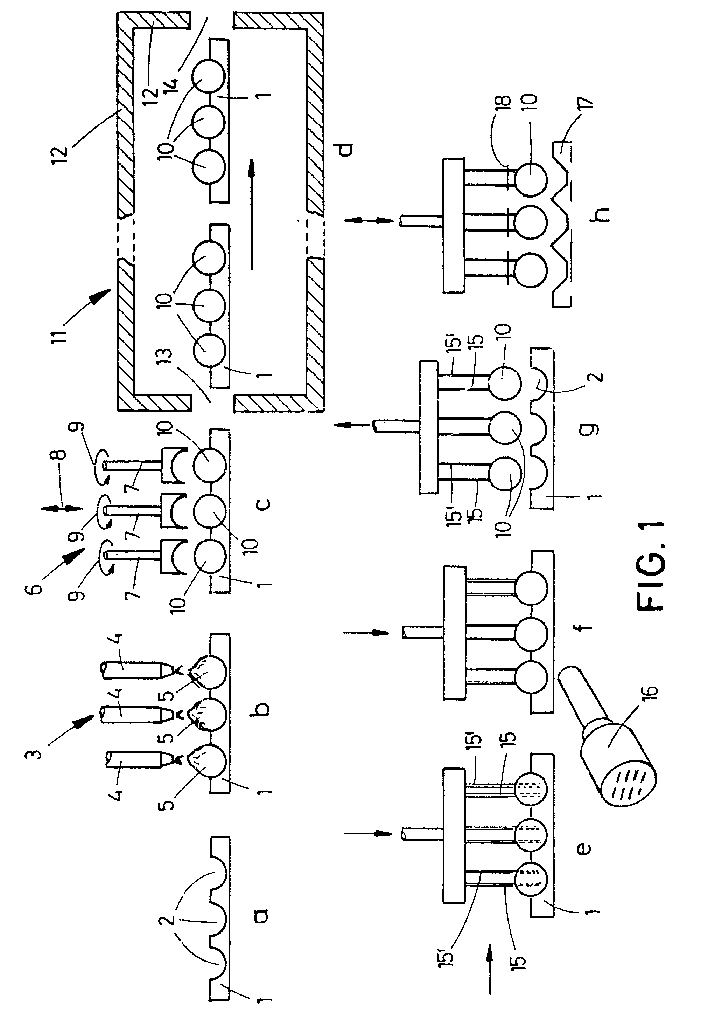

In Fig. 1a ist zunächst schematisch eine Unterform 1 angedeutet, welche über drei Vertiefungen 2 verfügt, die zur Aufnahme cremeförmiger Speiseeismasse dienen.

Die Unterform 1 besteht vorteilhafterweise aus rostfreiem Stahl.

Im Zuge des kontinuierlichen bzw. schrittweise durchzuführenden Herstellungsverfahrens wird die Unterform 1 zunächst in die Portionierstation 3 (Fig. 1b) gerückt und dort mit der erforderlichen Menge cremeförmiger Speiseeismasse gefüllt. Die Portionierstation weist eine Anzahl von Portionierrohren 4 auf, welche in der gleichen Weise angeordnet sind wie die Vertiefungen 2 der Unterform 1. Aus den Portionierrohren 4 wird bei jedem Arbeitstakt eine solche Menge cremeförmiger Speiseeismasse abgegeben, daß die Vertiefungen 2 völlig gefüllt werden und daß sich ein Überstand, eine sogenannte Krone bildet, deren Volumen dem Volumen der Vertiefung 2 entspricht. Die eingefüllten, nun durchaus noch nicht kugelförmigen Speiseeisportionen sind in Fig. 1b bei 5 dargestellt.

Im nächsten Arbeitstakt wird die Unterform 1 in die Glattstreichstation 6 gerückt. In dieser Station ist eine Anzahl von Glattstreichwerkzeugen 7 vorhanden, wobei die Anzahl und Anordnung dieser Werkzeuge ebenfalls wieder der Anzahl der Vertiefungen der Unterform 1 entspricht. Die Werkzeuge sind entsprechend dem Doppelpfeil 8 auf- und abbewegbar, und sie sind außerdem entsprechend den Umlaufpfeilen 9 in Rotation zu versetzen. Ist die Unterform 1 bei taktmäßiger Durchführung des Verfahrens in Arbeitsposition gerückt, so werden die Glattstreichwerkzeuge 7 zunächst in Rotation versetzt und alsdann langsam nach unten abgesenkt. Sie drücken und streichen dabei Speiseeismasse unter Bildung einer oberen Halbkugel glatt. Ist dies geschehen, so rücken die Werkzeuge wieder nach oben, wonach die einzelnen Speiseeisportionen die Form von Kugeln 10 angenommen haben. Die Speiseeisportionen sind nun fertig geformt, jedoch noch leicht deformierbar. Sie rücken als nächstes in die Behandlungsstation 1d, nämlich die Tiefkühleinrichtung 11. Bei dieser Tiefkühleinrichtung handelt es sich vorteilhafterweise um einen mit Umluft arbeitenden Tiefkühltunnel, dessen Abmessungen entsprechend der geforderten Leistung eingestellt sind. Der Tunnel ist in Fig. 1d nur schematisch dargestellt. Er besteht in dieser Darstellung aus den Tunnelwänden 12 mit Tunneleingang 13 und Tunnelausgang 14. Die Transporteinrichtungen sowie die Kühleinrichtungen sind der Übersichtlichkeit halber fortgelassen.

Beim Durchgang durch den Tunnel, also die Tiefkühleinrichtung 11 werden die Kugeln 10 derart tiefgekühlt, daß sie nun ein hinreichend hohe Festigkeit haben und bei der weiteren Handhabung nicht mehr deformiert werden können.

Die Unterform 1 mit den darin liegenden, nun tiefgekühlten Kugeln 10 gelangt als nächstes in die Entnahmestation bzw. Entnahmevorrichtung 1e. In dieser Entnahmevorrichtung sind jeder Kugel 10 wenigstens zwei Spicknadeln 15, 15' zugeordnet. Die Spicknadeln sind um eine gemeinsame Mittelachse drehbar und entlang dieser Achse auf- und abbewegbar. Zur Entnahme der Kugeln werden die Spicknadeln in die Kugeln eingesteckt und dann unter leichter Drehung um die gemeinsame Mittelachse die Vorrichtung angehoben. Die Drehung bewirkt, daß die Kugeln sich leicht aus ihren Vertiefungen 2 und somit aus der Unterform 1 lösen. Der Vorgang ist in Fig. 1, Teilbildern e, f, und g dargestellt. Zum Erleichtern des Ablösens kann die Unterform 1 dabei leicht erwärmt werden, beispielsweise mit einem Warmluftgebläse 16.

Nach dem Anheben der Kugeln 10 (Fig. 1g) wird ein geeignetes Verpackungsmaterial, beispielsweise eine mit Vertiefungen ausgerüstete Kunststoffschale 17 in die erforderliche Position gebracht. Die Kugeln können dann leicht von den Nadeln abgesetzt oder abgestreift werden, beispielweise durch Hochziehen und unter Zuhilfenahme von Abstreiferbalken 18.

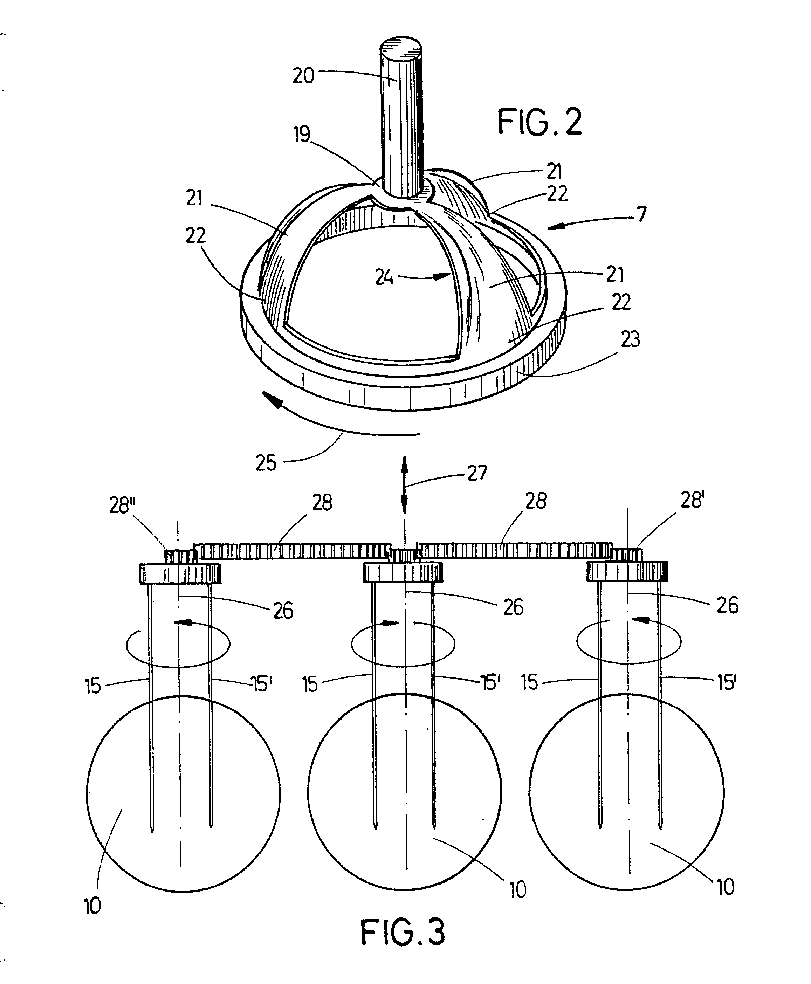

In Fig. 2 der Zeichnung ist eine bevorzugte Ausführungsform eines Streichwerkzeuges (Glattstreichwerkzeug) dargestellt, welches als Ganzes mit 7 bezeichnet ist. Das Werkzeug hat die Form einer Halbkugel, an deren Zenit 19 ein rohr- und stangenförmiger Fortsatz 20 befestigt ist. Der Mantel des Werkzeuges ist unter zurücklassen von Segmenten 21 durchbrochen. Im dargestellten Ausführungsbeispiel sind insgesamt drei derartige Segmente vorhanden, die an ihrem Äquatorial-Ende 22 mittels eines Kreisringes 23 miteinander verbunden sind. Es entsteht auf diese Weise ein kompaktes, formstabiles Werkzeug, welches leicht innerhalb der Glattstreichstation Fig. 1c eingesetzt werden kann.

Als besonders vorteilhaft hat es sich erwiesen, wenn die Segmente 21 an ihren Frontseiten 24 schaufelartig aufgewölbt sind. Bei der Drehbewegung des Werkzeuges in Richtung des Pfeiles 25 liegen diese schaufelartigen Aufwölbungen dann vorne und erfassen alle überstehende Eismasse, die sie zum Glattstreichen unter das jeweilige Segment 21 leiten.

In Fig. 3 ist eine Ausführungsform einer Entnahmevorrichtung gemäß Fig. 1e bis 1h schematisch dargestellt. Es ist erkennbar, daß jeder Speiseeiskugel 10 zwei Spicknadeln 15, 15' zugeordnet sind. Die jeweils einer Kugel zugeordneten Spicknadeln sind um eine gemeinsame Mittelachse 26 drehbar und außerdem in Richtung des Doppelpfeiles 27 auf- und abbewegbar. Die Drehbarkeit ist im dargestellten Ausführungsbeispiel durch das schematisch angedeutete Zahnradgetriebes 28, 28', 28'' bewerkstelligt. Jede andere Lösung, so auch der Einzelantrieb

## Patentansprüche

1. Anordnung zum Herstellen von Einzelportionen aus Speiseeis mit folgenden Merkmalen:
   a) wenigstens einer Unterform (1);
   b) wenigstens einer Portioniervorrichtung (3) für cremeförmige Speiseeismasse;
   c) wenigstens ein auf- und abbewegbares Formwerkzeug (7),
   dadurch gekennzeichnet, daß zur Herstellung von kugelförmigen Speiseeisportionen zusätzlich folgende Merkmale vorhanden sind:
   d) die Unterform (1) ist halbkugelförmig;
   e) das Formwerkzeug (7) ist ein in Rotation versetzbares halbkugelsegmentartiges Streichwerkzeug, dessen Segmente (21) an ihren Frontseiten (24) schaufelartig aufgewölbt sind.

2. Anordnung nach Anspruch 1, dadurch gekennzeichnet, daß die Anordnung eine Entnahmevorrichtung für die fertigen Speiseeiskugeln aufweist, die wenigstens zwei Spicknadeln (15, 15') je Speiseeiskugel umfaßt, die um eine gemeinsame Mittelachse (26) drehbar und entlang dieser Achse auf- und abbewegbar sind.

## Claims

1. An arrangement for the production of portions of ice-cream, with the following features:
   a) at least one lower mould (1);
   b) at least one portion dispenser device (3) for creamy ice-cream mixture;
   c) at least one shaping tool which can be moved up and down (7),
   characterized by the following additional features for the production of spherical portions of ice-cream:
   d) the lower mould (1) is in the shape of a hemisphere;
   e) the shaping tool (7) is a smoothing tool similar to semisphere segments, which can be rotated and whose segments (21) include shovel-like curvatures on their front sides (24).

2. An arrangement as claimed in claim 1, characterized in that the arrangement includes a removal device for completed spheres of ice-cream comprising at least two spikes (15, 15') per sphere of ice-cream, which are rotatable about a common central axis (26) and are movable upwards and downwards along this axis.

## Revendications

1. Disposition pour la production de portions de glace ayant les caractéristiques suivantes:
   a) au moins un demi-moule inférieur (1);
   b) au moins un dispensateur de portions (3) pour une masse de glace crémeuse;
   c) au moins un outil de formage qui peut être mu vers le haut et vers le bas (7)
   caractérisé en ce que pour la production de portions de glace en forme de boule, la disposition possède les caractéristiques additionelles suivantes:
   d) le demi-moule (1) a la forme d'une hémisphère;
   e) l'outil de formage (7) est un outil de lissage similaire à des segments d'une hémisphère, dont les segments (21) sont courbés en forme de pelle sur leurs parties frontales (24).

2. Disposition selon la revendication 1, caractérisé en ce que la disposition comprend un dispositif de détachement pour les boules de glace produites, qui contient au moins deux aiguilles (15, 15') pour chaque boule de glace, qui sont rotatives autour d'un axe central commun (26) et qui peuvent être mues le long de cet axe vers le haut et vers le bas.

FIG. 1

EP 0 219 646 B1

FIG.2

FIG.3